# EUROPÄISCHE PATENTSCHRIFT

(11) **EP 2 488 744 B1**
(45) Veröffentlichungstag und Bekanntmachung des Hinweises auf die Patenterteilung: **22.01.2014**
(21) Anmeldenummer: 10752777.2
(22) Anmeldetag: 06.09.2010
(51) Int. Cl.: F02M 61/14, F02M 61/16

(54) **VERFAHREN ZUR MONTAGE EINES DICHTUNGSRINGS**
METHOD FOR MOUNTING A SEALING RING
PROCEDE DE MONTAGE D'UN JOINT D'ETANCHEITE

(30) Priorität: 14.10.2009 DE 102009045692
(43) Veröffentlichungstag der Anmeldung: 22.08.2012
(73) Patentinhaber: Robert Bosch GmbH, 70442 Stuttgart (DE)
(72) Erfinder: BECKMANN, Thilo, 96123 Litzendorf Naisa (DE); FISCHER, Ulrich, 71254 Ditzingen (DE); BAYER, Johann, 96129 Strullendorf (DE); PILGRAM, Guido, 96163 Gundelsheim (DE)
(86) Internationale Anmeldenummer: PCT/EP2010/063008
(87) Internationale Veröffentlichungsnummer: WO 2011/045120

(56) Entgegenhaltungen:
- WO-A1-02/073026
- WO-A1-03/060316
- JP-A- 2002 081 548

## Beschreibung

### Stand der Technik

Die Erfindung geht aus von einem Verfahren zur Montage eines Dichtungsrings auf ein Einspritzventil, insbesondere auf ein Kraftstoffeinspritzventil für eine Brennkraftmaschine, nach dem Oberbegriff des Anspruchs 1.

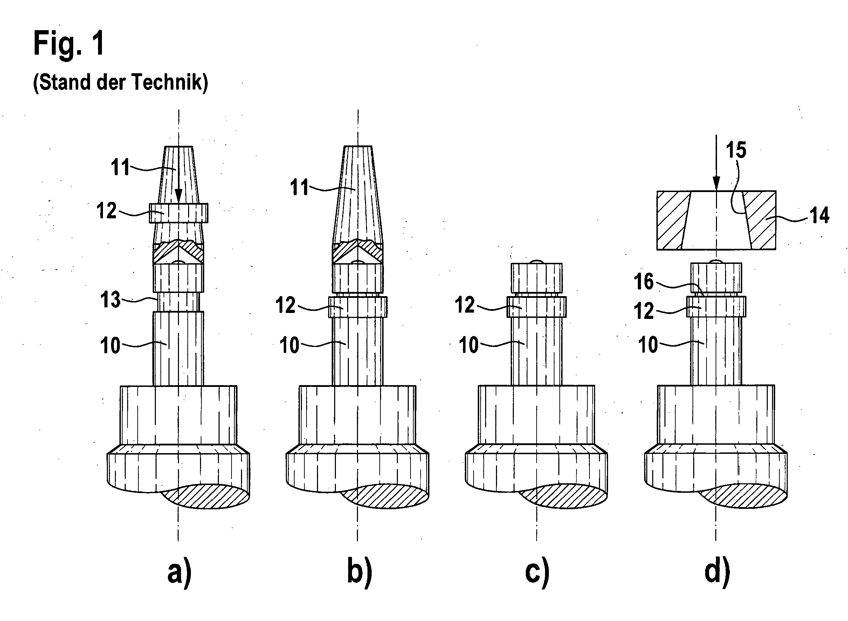

Für Direkteinspritzung von Kraftstoff in als Otto-Motoren ausgebildeten Brennkraftmaschinen für Kraftfahrzeuge werden Kraftstoffeinspritzventile verwendet, die abhängig vom Fahrzustand des Kraftfahrzeugs unter Hochdruck stehenden Kraftstoff dosiert und fein zerstäubt direkt in den Brennraum der Brennkraftmaschine einspritzen. Ein solches Kraftstoffeinspritzventil ist z.B. aus der DE 199 46 602 A1 oder der JP 2002081548 bekannt. Ein solches Kraftstoffeinspritzventil wird so in eine Bohrung eines einen Brennraum verschließenden Zylinderkopfs der Brennkraftmaschine eingesetzt, dass die mit Spritzöffnungen versehene Spitze des Einspritzventils in den Brennraum hineinragt und der auf dem Kraftstoffeinspritzventil sitzende Dichtungsring eine Brennraumabdichtung zwischen Kraftstoffeinspritzventil und Bohrungswand der Zylinderkopfbohrung herstellt. Der üblicherweise einen rechteckigen Querschnitt aufweisende Dichtungsring besteht aus einem wenig elastischen Kunststoff, z.B. Polytetrafluorethylen (PTFE). Der Dichtungsring wird vor der Montage des Kraftstoffeinspritzventils in den Zylinderkopf in eine im Kraftstoffeinspritzventil vorhandene Ringnut eingesetzt. Da der an den Durchmesser des Nutgrunds der Ringnut angepasste Innendurchmesser der Dichtung kleiner ist als der Durchmesser der Ringnut am Nutrand; wird - wie dies in Fig. 1 skizziert ist - auf die Spitze des Kraftstoffeinspritzventils ein Aufweitwerkzeug 11 aufgesetzt (Fig. 1a) und der Dichtungsring 12 über das Aufweitwerkzeug 11 auf das Kraftstoffeinspritzventil aufgeschoben, wobei der Dichtungsring 12 aufgeweitet wird und nunmehr auf dem Kraftstoffeinspritzventil 10 bis in die Ringnut 13 verschoben werden kann (Fig. 1 b). Danach wird das Aufweitwerkzeug 11 vom Kraftstoffeinspritzventil 10 abgenommen (Fig. 1c). Wegen der geringen Elastizität des Materials des Dichtungsrings 13 bleibt der Dichtungsring 13 zunächst aufgeweitet und presst sich nicht in die Ringnut 13 vollständig ein (Fig. 1c). Daher wird der Dichtungsring 12 mittels eines sog. Kalibrierwerkzeugs 14 auf seinen endgültigen Außendurchmesser, sein vorgegebenes Dichtungsmaß, umgeformt. Hierzu wird das Kalibrierwerkzeug 14 auf die Spitze des Kraftstoffeinspritzventils 10 aufgesetzt und über den Dichtungsring 12 geschoben (Fig. 1 d). Zum Umformen des Dichtungsrings 12 besitzt das Kalibrierwerkzeug 14 einen sich gegen die Aufschieberichtung im Innendurchmesser verjüngenden Hohlkonus 15, dessen auf der vom Kraftstoffeinspritzventil 10 abgekehrten Seite des Hohlkonus 15 liegender, kleinster lichter Durchmesser auf das gewünschte Dichtungsmaß des Dichtungsrings 13 abgestimmt ist. Der Hohlkonus 15 verformt beim Aufschieben des Kalibrierwerkzeugs 14 zunehmend den Dichtungsring 12 bis auf den gewünschten Außendurchmesser, das sog. Dichtungsmaß, und presst zugleich den Dichtungsring 12 in die Ringnut 13 ein. Bei diesem Kalibriervorgang des Dichtungsrings 12 wird dieser naturgemäß gegen die vom Brennraum abgekehrte Flanke der Ringnut 13 angepresst. Um bei der Montage des Kraftstoffeinspritzventils 10 in den Zylinderkopf sehr hohe Einpresskräfte und ein Abscheren des Dichtungsrings 12 zu vermeiden, darf die vom Dichtungsring 12 belegte Ringnut 13 von dem Dichtungsring 12 nicht überfüllt werden. Der Dichtungsring 12 wird daher so bemessen, dass nach seiner Umformung ein Restringspalt 16 in der Ringnut 12 verbleibt. Da - wie bereits vorstehend erwähnt - der Dichtungsring 12 durch den Kalibriervorgang an die vom Brennraum abgekehrte Flanke der Ringnut 13 angepresst wird, bildet sich dieser Restringspalt 16 an der dem Brennraum zugekehrten Nutflanke aus. Dieser Restringspalt 16 wird im Betrieb der Brennkraftmaschine durch Verbrennungsrückstände gefüllt, wodurch der Dichtungsring 12 zusätzlich gegen die hohe thermische Belastung durch die Abgase im Brennraum geschützt wird.

Bei Einsatz von ethanolhaltigen Kraftstoffen und vorzugsweise bei zentralem Einbau des Kraftstoffeinspritzventils in den Zylinderkopf, fehlen diese Verbrennungsrückstände, und heiße Partikel fangen sich in dem Restluftspalt. Die heißen Partikel können durch den Dichtungsring hindurchbrennen und zu einer undichten Brennraumabdichtung und als deren Folge zum Ausfall des Kraftstoffeinspritzventils führen.

### Offenbarung der Erfindung

Das erfindungsgemäße Verfahren zur Montage des Dichtungsrings mit den Merkmalen des Anspruchs 1 hat den Vorteil, dass durch den beim Abziehen - und nicht beim Aufsetzen - des Kalibrierwerkzeugs durchgeführten Umformungsprozess des Dichtungsrings eine Verlagerung des in der Ringnut verbleibenden Restringspalts zu der vom Brennraum abgekehrten Nutflanke hin erfolgt. Der Dichtungsring stützt sich an der dem Brennraum zugekehrten Nutflanke der Ringnut ab und behält diese Position auch beim Einbau in den Zylinderkopf bei. Damit können sich keine heißen Partikel vor dem Dichtungsring fangen und den Dichtungsring nicht thermisch schädigen.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer vorteilhaften Ausführungsform der Erfindung erfolgt die Umformung des Dichtungsrings durch einen in dem Kalibrierwerkzeug ausgebildeten, gegen die Abziehrichtung des Kalibrierwerkzeugs vom Kraftstoffeinspritzventil sich in seinem lichten Konusdurchmesser verjüngenden Hohlkonus, dessen kleinster lichter Durchmesser an das vorgegebene Dichtungsmaß des Dichtungsrings angepasst wird. Das Kalibrierwerkzeug wird hinter dem in der Ringnut einliegenden Dichtungsring auf das Kraftstoffeinspritzventil aufgesetzt, geschlossen und über den Dichtungsring hinweg vom Kraftstoffeinspritzventil abgezogen, wodurch der Dichtungsring in die Ringnut eingepresst und auf sein Dichtungsmaß umgeformt wird.

Ein den montierten Dichtungsring tragendes Einsprizventil ist in Anspruch 6 angegeben.

### Kurze Beschreibung der Zeichnungen

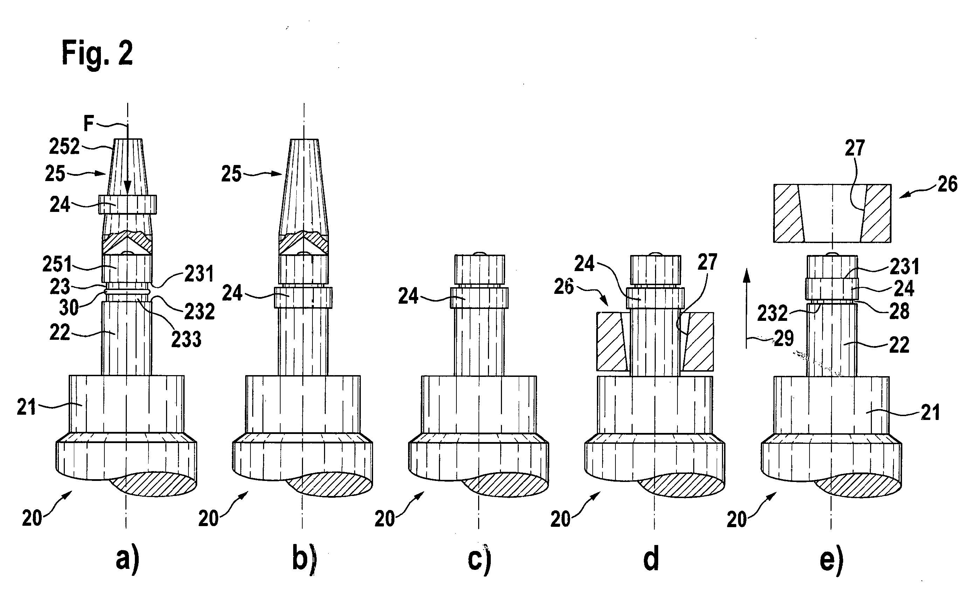

Die Erfindung ist anhand eines in Fig. 2 illustrierten Ausführungsbeispiels in der nachfolgenden Beschreibung näher erläutert. Es zeigen:
- Fig. 1: eine Illustration des zum Stand der Technik beschriebenen Montageverfahrens für einen auf ein Kraftstoffeinspritzventil aufzubringenden Dichtungsrings in vier einzelnen Verfahrensfortschritten a - d,
- Fig. 2: eine Illustration des erfindungsgemäßen Montageverfahrens zum Aufbringen des Dichtungsrings auf ein Kraftstoffeinspritzventil in fünf einzelnen Verfahrensfortschritten a - e.

Das in Fig. 2 als Beispiel für ein Einspritzventil in Seitenansicht ausschnittweise dargestellte Kraftstoffeinspritzventil 20 für eine Brennkraftmaschine eines Kraftfahrzeugs dient z. B. zum dosierten Einspritzen von fein zerstäubtem Kraftstoff in den Brennraum einer Brennkraftmaschine und ist hierzu in einen den Brennraum der Brennkraftmaschine abschließenden Zylinderkopf eingesetzt, wobei die Spitze des Kraftstoffeinspritzventils 20 in den Brennraum hineinragt. Das Kraftstoffeinspritzventil 20 weist ein Ventilgehäuse 21 und einen daraus axial vorstehenden Ventilsitzträger 22 mit gegenüber dem Ventilgehäuse 21 kleineren Außendurchmesser auf. Der Ventilsitzträger 22 ist in bekannter Weise aus einem vom Ventilgehäuse 21 abgekehrten Ende mit einem hier nicht zu sehenden Ventilsitzkörper abgeschlossen, an dem ein eine Ventilöffnung umschließender Ventilsitz ausgebildet und eine der Ventilöffnung nachgeordnete Spritzlochscheibe befestigt ist. Im Axialabstand vom freien Ende des Ventilsitzträgers 22 ist von außen in den Ventilsitzträger 22 eine Ringnut 23 eingebracht. Die Ringnut 23 weist zwei Nutflanken 231 und 232 sowie einen Nutgrund 233 und einen Nutrand auf, dessen Durchmesser größer ist als der Nutgrunddurchmesser. Am Nutgrund 233 ist vorzugsweise mittig ein erhabener, umlaufender Wulst 30 einstückig angeformt, dessen Außendurchmesser etwas größer als der Nutgrunddurchmesser und dessen axiale Breite sehr viel kleiner als die Nutbreite ist. In die Ringnut 23 ist ein Dichtungsring 24 eingesetzt, der nach Montage des Kraftstoffeinspritzventils 20 in den Zylinderkopf der Brennkraftmaschine das Kraftstoffeinspritzventil 20 gegen eine Bohrungswand einer das Kraftstoffeinspritzventil 20 aufnehmenden Zylinderbohrung dichtet. Der Dichtungsring 24 besteht aus einem Kunststoff, z.B. Polytetrafluorethylen (PTFE), der keine so ausreichende Elastizität besitzt, dass der Dichtungsring 24 einfach auf dem Ventilsitzträger 22 aufgeschoben werden kann und dann in die Ringnut 23 einschnappt. Um dem Rechnung zu tragen, wird der Dichtungsring 24 mittels eines Aufweitwerkzeugs 25 (Fig. 2a) aufgeweitet und in die Ringnut 23 eingeschoben und der in der Ringnut 23 aufgenommene, aufgeweitete Dichtungsring 24 mittels eines Kalibrierwerkzeugs 26 (Fig. 2d) auf ein vorgegebenes, gegenüber dem Außenmaß des aufgeweiteten Dichtungsrings 24 kleineres Dichtungsmaß umgeformt. Hierzu wird das Kalibrierwerkzeug 26 auf das Kraftstoffeinspritzventil 20 aufgesetzt und der Umformungsprozess des Dichtungsrings 24 beim Abziehen des Kalibrierwerkzeugs 26 vom Kraftstoffeinspritzventil 20 durchgeführt. Dieses Montageverfahren ist, in Fig. 2 in fünf Verfahrensfortschritten illustriert:

Zunächst wird das Aufweitwerkzeug 25 auf die Spitze des Kraftstoffeinspritzventils 20, genauer gesagt auf die Stirnseite des Ventilsitzträgers 22, aufgesetzt. Das Aufweitwerkzeug 25 weist einen Zylinderabschnitt 251, mit einem gegenüber dem Außendurchmesser des Ventilsitzträgers 22 wenig größeren Außendurchmesser und einen sich daran anschließenden Konusabschnitt 252 auf, dessen Außendurchmesser zum freien Ende hin abnimmt. Wie in Fig. 2a illustriert ist, wird das Aufweitwerkzeug 25 so auf das freie Ende des Ventilsitzträgers 22 aufgesetzt, dass der Zylinderabschnitt 251 des Aufweitwerkzeugs 25 sich auf den Ventilsitzträger 22 bis nahe der Nutflanke 231 aufstülpt. Dann wird der Dichtungsring 24 auf den Konusabschnitt 252 des Aufweitwerkzeugs 25 aufgeschoben und mit einer Kraft F über den Zylinderabschnitt 251 des Aufweitwerkzeugs 25 bis in die Ringnut 23 geschoben. Beim Schieben über den Konusabschnitt 252 wird der Dichtungsring 24 auf den Außendurchmesser des Zylinderabschnitts 251 aufgeweitet und behält diese Aufweitung nach seiner Platzierung in der Ringnut 23 im wesentlichen bei (Fig. 1 b). Nach Entfernen des Aufweitwerkzeugs 25 (Fig. 1c) wird auf den Ventilsitzträger 22 im Bereich zwischen dem Ventilgehäuse 21 und dem in der Ringnut 23 sitzenden, aufgeweiteten Dichtungsring 24 das Kalibrierwerkzeug 26 aufgesetzt. Das Kalibrierwerkzeug 26 ist zu diesem Zweck zweiteilig ausgeführt ist. Alternativ kann das Kalibrierwerkzeug 26 ungeteilt sein und muss dann vor dem Aufsetzen des Aufweitwerkzeugs 25 auf dem Ventilsitzträger 22 platziert werden. Zur Umformung des Dichtungsrings 24 besitzt das Kalibrierwerkzeug 26 einen Hohlkonus 27, der sich gegen die in Fig. 2d mit Pfeil 29 angegebene Abziehrichtung des Kalibrierwerkzeugs 26 vom Kraftstoffeinspritzventil 20 verjüngt, d.h. dessen lichter Konusdurchmesser abnimmt. Wird das geschlossene Kalibrierwerkzeug 26 vom Kraftstoffeinspritzventil 20 abgezogen, so formt der Hohlkonus 27 den Dichtungsring 24 auf das gewünschte Dichtungsmaß, das durch den kleinsten lichten Durchmesser des Hohlkonus 27 bestimmt ist, um und presst zugleich den Dichtungsring 24 in die Ringnut 23 (Fig. 2e), wobei sich der Wulst 30 am Nutgrund 233 in den Dichtungsring 24 eindrückt. Um beim Umformungsprozess eine durch den Dichtungsring 24 überfüllte Ringnut 23 zu vermeiden, ist der Dichtungsring 24 so dimensioniert, dass unter allen Bedingungen des Umformungsprozesses ein Restringspalt 28 in der Ringnut 23 verbleibt. Da bei dem beim Abziehen des Kalibrierwerkzeugs 26 erfolgenden Umformungsprozess der Dichtungsring 24 gegen die vom Gehäuse 21 abgekehrte Nutflanke 231 der Ringnut 23 gepresst wird, bildet sich dieser Restringspalt 28 an der dem Gehäuse 21 zugekehrten Nutflanke 232 aus. Beim Einbau des Kraftstoffeinspritzventils 20 in den Zylinderkopf der Brennkraftmaschine verbleibt der Dichtungsring 24 in dieser Position, da der Wulst 30 ein evtl. Zurückschieben des Dichtungsrings 24 durch am Dichtungsring angreifende Reibkräfte sicher verhindert. Damit ist zwischen Dichtungsring 24 und Brennraum kein Ringspalt vorhanden, so dass sich keine heißen Partikel vor dem Dichtungsring 24 fangen und den Dichtungsring 24 thermisch schädigen können.

## Patentansprüche

1. Verfahren zur Montage eines Dichtungsrings (24) auf ein Einspritzventil nach einem der Ansprüche 6 oder 7, insbesondere Kraftstoffeinspritzventil (20) für eine Brennkraftmaschine, der in einer an dem Einspritzventil ausgebildeten Ringnut (23) mit gegenüber dem Nutgrunddurchmesser größeren Nutranddurchmesser einliegt, bei welchem der Dichtungsring (24) mittels eines Aufweitwerkzeugs (25) im Durchmesser aufgeweitet und in die Ringnut (23) eingeschoben und der in der Ringnut (23) aufgenommene, aufgeweitete Dichtungsring (24) mittels eines Kalibrierwerkzeugs (26) auf ein vorgegebenes, gegenüber dem aufgeweiteten Außenmaß kleineres Dichtungsmaß umgeformt wird, **dadurch gekennzeichnet, dass** die Umformung des Dichtungsrings (24) durch Abziehen des Kalibrierwerkzeugs (26) vom Kraftstoffeinspritzventil (20) vorgenommen wird.

2. Verfahren nach Anspruch 1, **dadurch gekennzeichnet, dass** die Umformung durch einen in den Kalibrierwerkzeug ausgebildeten, gegen die Abziehrichtung des Kalibrierwerkzeugs (26) sich verjüngenden Hohlkonus (27) erfolgt, dessen kleinster lichter Konusdurchmesser an ein vorgegebene Dichtungsmaß des Dichtungsrings (24) angepasst wird.

3. Verfahren nach Anspruch 1 oder 2, **dadurch gekennzeichnet, dass** das einen Zylinderabschnitt (251) und einen sich daran anschließenden, zum freien Ende hin sich verjüngenden Konusabschnitt (252) aufweisende Aufweitwerkzeug (25) mit seinen Zylinderabschnitt (251) auf das Kraftstoffeinspritzventil (20) stirnseitig aufgesetzt, der Dichtungsring (24) über den Konus- und Zylinderabschnitt (252, 251) auf das Kraftstoffeinspritzventil (20) aufgeschoben und in die Ringnut (23) eingeschoben und danach das Aufweitwerkzeug (25) vom Kraftstoffeinspritzventil (20) abgenommen wird.

4. Verfahren nach Anspruch 2 oder 3, **dadurch gekennzeichnet, dass** das Kalibrierwerkzeug (26) hinter dem in der Ringnut (23) einliegenden Dichtungsring (24) auf das Kraftstoffeinspritzventil (20) aufgesetzt und geschlossen wird und über den Dichtungsring (24) hinweg vom Kraftstoffeinspritzventil (20) abgezogen wird.

5. Verfahren nach einem der Ansprüche 1 bis 4, **dadurch gekennzeichnet, dass** das Kraftstoffeinspritzventil (20) ein Ventilgehäuse (21) und einen aus dem Ventilgehäuse (21) axial vorstehenden Ventilsitzträger (22) aufweist und dass die Ringnut (23) außen in den Ventilsitzträger (22) eingebracht ist.

6. Einspritzventil, insbesondere Kraftstoffeinspritzventil für Brennkraftmaschinen, mit einem Ventilgehäuse (21) und einem aus dem Ventilgehäuse (21) herausragenden Ventilsitzträger (22), der außen im Axialabstand von seinem vom Ventilgehäuse (21) abgekehrten freien Ende eine Ringnut (23) mit Nutgrund (233) und Nutflanken (231,232) aufweist, und mit einem in der Ringnut (23) aufgenommenen Dichtungsring (24), **dadurch gekennzeichnet, dass** nach den Montage in den Zylinderkopf der auf dem Nutgrund (233) sitzende Dichtungsring (24) an der dem freien Ende des Ventilsitzträgers (22) näherliegenden Nutflanke (231) anliegt und dass zwischen Dichtungsring (24) und dem Ventilgehäuse (21) näherliegenden Nutflanke (232) ein Restringspalt (28) vorhanden ist.

7. Einspritzventil nach Anspruch 6, **dadurch gekennzeichnet, dass** am Nutgrund (233) ein erhabenener, umlaufender, schmaler Wulst (30) ausgebildet ist, der sich in die innere Ringfläche des Dichtungsrings (24) eindrückt.

## Claims

1. Method for mounting a seal ring (24) on an injection valve according to either of Claims 6 and 7, in particular fuel injection valve (20) for an internal combustion engine, which seal ring lies in an annular groove (23) which is formed on the injection valve and which has a groove edge diameter greater than the groove base diameter, in which method the seal ring (24) is expanded in diameter, and pushed into the annular groove (23), by means of an expansion tool (25), and the expanded seal ring (24) received in the annular groove (23) is deformed, by means of a calibration tool (26), to a predefined seal dimension smaller than the expanded outer dimension, **characterized in that** the deformation of the seal ring (24) is performed by pulling the calibration tool (26) off the fuel injection valve (20).

2. Method according to Claim 1, **characterized in that** the deformation is realized by means of a hollow cone (27) which is formed in the calibration tool and which narrows counter to the pulling-off direction of the calibration tool (26) and the smallest clear cone diameter of which is matched to a predefined seal dimension of the seal ring (24).

3. Method according to Claim 1 or 2, **characterized in that** the expansion tool (25), which has a cylinder portion (251) and, adjoining the latter, a cone portion (252) which narrows toward the free end, is mounted by way of its cylinder portion (251) onto the face side of the fuel injection valve (20), the seal ring (24) is pushed over the cone and cylinder portions (252, 251) onto the fuel injection valve (20) and is pushed into the annular groove (23), and the expansion tool (25) is subsequently removed from the fuel injection valve (20).

4. Method according to Claim 2 or 3, **characterized in that** the calibration tool (26) is mounted onto the fuel injection valve (20) behind the seal ring (24) lying in the annular groove (23), is closed, and is pulled off the fuel injection valve (20) across the seal ring (24).

5. Method according to one of Claims 1 to 4, **characterized in that** the fuel injection valve (20) has a valve housing (21) and a valve seat carrier (22) projecting axially from the valve housing (21), and **in that** the annular groove (23) is formed into the outside of the valve seat carrier (22).

6. Injection valve, in particular fuel injection valve for internal combustion engines, having a valve housing (21) and having a valve seat carrier (22) which projects from the valve housing (21), which valve seat carrier has, on the outside and at an axial distance from its free end averted from the valve housing (21), an annular groove (23) with groove base (233) and groove flanks (231, 232), and having a seal ring (24) received in the annular groove (23), **characterized in that**, after the process of mounting into the cylinder head, the seal ring (24) seated on the groove base (233) bears against that groove flank (231) which is situated closer to the free end of the valve seat carrier (22), and **in that** a residual annular gap (28) exists between the seal ring (24) and that groove flank (232) which is situated closer to the valve housing (21).

7. Injection valve according to Claim 6, **characterized in that** a raised, encircling, narrow bead (30) is formed on the groove base (233), which bead presses into the inner ring surface of the seal ring (24).

## Revendications

1. Procédé de montage d'une bague d'étanchéité (24) sur une soupape d'injection selon la revendication 6 ou 7, en particulier sur une soupape d'injection de carburant (20) pour un moteur à combustion interne, laquelle bague d'étanchéité est logée dans une rainure annulaire (23) réalisée sur la soupape d'injection et présentant un diamètre de bord de rainure supérieur au diamètre de fond de rainure, dans lequel procédé le diamètre de la bague d'étanchéité (24) est élargi au moyen d'un outil d'élargissement (25) et la bague d'étanchéité est insérée dans la rainure annulaire (23), et la bague d'étanchéité (24) élargie reçue dans la rainure annulaire (23) est déformée au moyen d'un outil de calibrage (26) jusqu'à une dimension d'étanchéité prédéfinie inférieure à la dimension extérieure élargie, **caractérisé en ce que** la déformation de la bague d'étanchéité (24) est effectuée par retrait de l'outil de calibrage (26) de la soupape d'injection de carburant (20).

2. Procédé selon la revendication 1, **caractérisé en ce que** la déformation s'effectue au moyen d'un cône creux (27) réalisé dans l'outil de calibrage et se rétrécissant dans le sens opposé au sens de retrait de l'outil de calibrage (26), le plus petit diamètre intérieur du cône creux étant adapté à une dimension d'étanchéité prédéfinie de la bague d'étanchéité (24).

3. Procédé selon la revendication 1 ou 2, **caractérisé en ce que** l'outil d'élargissement (25) comprenant une portion cylindrique (251) et une portion conique (252) s'y raccordant et se rétrécissant en direction de l'extrémité libre est placé par sa portion cylindrique (251) du côté frontal sur la soupape d'injection de carburant (20), la bague d'étanchéité (24) est enfilée sur la soupape d'injection de carburant (20) au-delà des portions conique et cylindrique (252, 251) et insérée dans la rainure annulaire (23) puis l'outil d'élargissement (25) est enlevé de la soupape d'injection de carburant (20).

4. Procédé selon la revendication 2 ou 3, **caractérisé en ce que** l'outil de calibrage (26) est placé sur la soupape d'injection de carburant (20) derrière la bague d'étanchéité (24) logée dans la rainure annulaire (23) et fermé et retiré de la soupape d'injection de carburant (20) par-dessus la bague d'étanchéité (24).

5. Procédé selon l'une quelconque des revendications 1 à 4, **caractérisé en ce que** la soupape d'injection de carburant (20) comprend un boîtier de soupape (21) et un support de siège de soupape (22) faisant saillie axialement hors du boîtier de soupape (21), et **en ce que** la rainure annulaire (23) est ménagée à l'extérieur dans le support de siège de soupape (22).

6. Soupape d'injection, en particulier soupape d'injection de carburant pour moteurs à combustion interne, comprenant un boîtier de soupape (21) et un support de siège de soupape (22) dépassant du boîtier de soupape (21), lequel support de siège de soupape comprend à l'extérieur, à une distance axiale de son extrémité libre opposée au boîtier de soupape (21), une rainure annulaire (23) pourvue d'un fond de rainure (233) et de flancs de rainure (231, 232), et comprenant une bague d'étanchéité (24) reçue dans la rainure annulaire (23), **caractérisée en ce qu'**après le montage dans la culasse, la bague d'étanchéité (24) reposant sur le fond de rainure (233) s'applique contre le flanc de rainure (231) plus proche de l'extrémité libre du support de siège de soupape (22), et **en ce qu'**un interstice annulaire résiduel (28) est présent entre la bague d'étanchéité (24) et le flanc de rainure (232) plus proche du boîtier de soupape (21).

7. Soupape d'injection selon la revendication 6, **caractérisée en ce qu'**un bourrelet (30) étroit, périphérique et surélevé est réalisé sur le fond de rainure (233), lequel bourrelet s'enfonce dans la surface annulaire intérieure de la bague d'étanchéité (24).
